# EUROPEAN PATENT APPLICATION

(11) **EP 2 275 182 A1**
(43) Date of publication of application: **19.01.2011**
(21) Application number: 09382272.4
(22) Date of filing: 10.12.2009
(51) Int. Cl.: A63F 13/08, G07F 9/10, A47F 3/00

(54) **Protection cabinet for amusement machines**

(30) Priority: 10.07.2009 ES 200901120 U
(71) Applicant: Osorio Velasco, Antonio, 08110 Montcada i Reixach, Barcelona (ES)
(72) Inventor: Osorio Velasco, Antonio, 08110 Montcada i Reixach, Barcelona (ES)
(74) Representative: Martin Santos, Victoria Sofia

(57) **Abstract**

A protection cabinet having two bodies, a fixed body and a mobile body that shifts with respect to the fixed body, remaining arranged outside the fixed body. The mobile body has closing means, either by means of a blind housed in a drawer on the top portion of the mobile body, or by means of one or two sheets which, abutted against the sides of the mobile body, can shift in parallel to the mobile body and finally hinge to enclose the mobile body. On the other hand, between the mobile body and the fixed body there are shifting and guiding means arranged in front of one another and complementarily, thus achieving the protection of an amusement machine when it is not in use and maintaining its visibility and attractiveness to the public since part of it remains uncovered and projecting from the overlapping bodies of the protection cabinet.

## Description

### OBJECT OF THE INVENTION

The object of the present invention is a protection cabinet for amusement machines that aims to protect said machines from any possible vandalistic actions it may be subjected to, as well as allowing it to be seen in its entirety when in use in order to increase its attractiveness.

This invention is characterised by the special configuration and design of the elements forming the object of the invention, which is formed by two parts or bodies, a fixed body and a mobile body, which allow achieving its intended double functionality, that of protection and visualisation of the machine during operation, without giving up any of the two.

Therefore, this invention lies within the scope of means of protection designed to protect amusement machines, and especially to protection cabinets.

### BACKGROUND OF THE INVENTION.

The cabinets used to date and known for protecting amusement machines are cabinets that are fixed to the ground, closed on four sides, the back, the sides and the top, with only the front part open, and also having a blind that is raised and lowered in order to make the machine accessible to the public for playing or not. In order to enable the machine for use by the public, it would suffice to raise the blind for a user to access the machine for use.

However, these means of protection known and used to date imply a serious drawback regarding the attractiveness of the amusement machines, since the cabinets hired the amusement machines, which remain hidden inside them and thus go unnoticed.

Therefore, it is the object of this invention to develop a protection cabinet such as that claimed and which overcomes these drawbacks, that is, which achieves the function of protecting the amusement machines but without these remaining hidden within the cabinet, which clearly limits their attractiveness.

### DESCRIPTION OF THE INVENTION

This invention of a cabinet for amusement machines basically consists in two bodies, a fixed body and a mobile body that shifts with respect to the fixed body, remaining either covering the cabinet with respect to the fixed body or housed inside it.

The fixed body has four sides, two on each side, one at the back and one on the top, and also a floor. The mobile body has a structure of dimensions such as to allow it to partially cover the fixed body.

The mobile body has closing means that prevent access to the inside, and said means can be an upper drawer housing a blind or at least one hinged sheet that closes access to the inside of the mobile body.

The blind can be raised to make it accessible to the public or lowered to protect the amusement machine by fixing the blind to the floor or to any other part.

The closing means with at least one hinged sheet are designed such that when the mobile body has its front side open, the sheet or sheets remain abutted against the sides and can shift lengthwise, in parallel to the sides of the mobile body along guides provided, up to a position in which the sheet or sheets can hinge in order to close the mobile body.

In order for the mobile body to be able to shift with respect to the fixed body, both bodies have shifting and guiding means, which in one possible embodiment could be guides, and guide rails. Said shifting and guiding means are arranged facing and complementary to one another, which facilitates the shifting and guiding of the mobile body over the fixed body.

On the other hand, the mobile body has some wheels provided on its base to facilitate running.

Therefore, with the cabinet object of the invention, when closed, the assembly of the fixed body and the mobile body envelopes the amusement machine on its five sides.

To prepare the machine for public use, free the blind from its closing means and the fixing means securing it to the floor or any other place it may be secured to, raise the blind and shift the mobile body until it completely overlaps the fixed body.

In the event that the closing means work by one or two sheets that hinge over the mobile body, in order to prepare the machine for public use, open the sheets until they are parallel to the side panels in order to then shift then in parallel to the mobile body without them protruding by shifting the mobile body until it overlaps the fixed body.

The features of the cabinet object of the invention produce a cabinet that on the one hand offers protection for the amusement machine when it is not in use, and on the other hand maintains its visibility and attractiveness to the public because part of it remains visible, protruding from the two overlapping bodies of the cabinet.

### DESCRIPTION OF THE DRAWINGS

In order to complement the description below and with the object of aiding towards a better understanding of its features, attached to the present specification and as an integral part thereof is a set of drawings in which the most significant details of the invention have been represented with an illustrative and non-limiting nature.
Figure 1 shows a perspective view of the two bodies, the fixed body and the mobile body that make up the protection cabinet object of the invention.
Figure 2 shows how the mobile body and the fixed body are arranged for the protection of the amusement machine.
Figure 3 shows the arrangement of the fixed cabinet and the mobile cabinet with respect to one another during use, remaining visible by the public.
Figure 4 shows a perspective view of a mobile body of the protection cabinet with the assembly closed by means of two sheets assembled over the mobile body.
Figure 5 shows a detail of the previous drawing with the means necessary for the lengthwise shifting of the door and its hinges.
Figure 6 shows an elevational view of the detail of the hinges of a door sheet having abutting means incorporated that limit the opening and closing movements of the door.
Figure 7 shows a detail of the additional workpiece acting as a butt end for the door and its position with respect to the door axis.

### DESCRIPTION OF THE DRAWINGS.

A preferred embodiment of the invention proposed is described below in view of the figures.

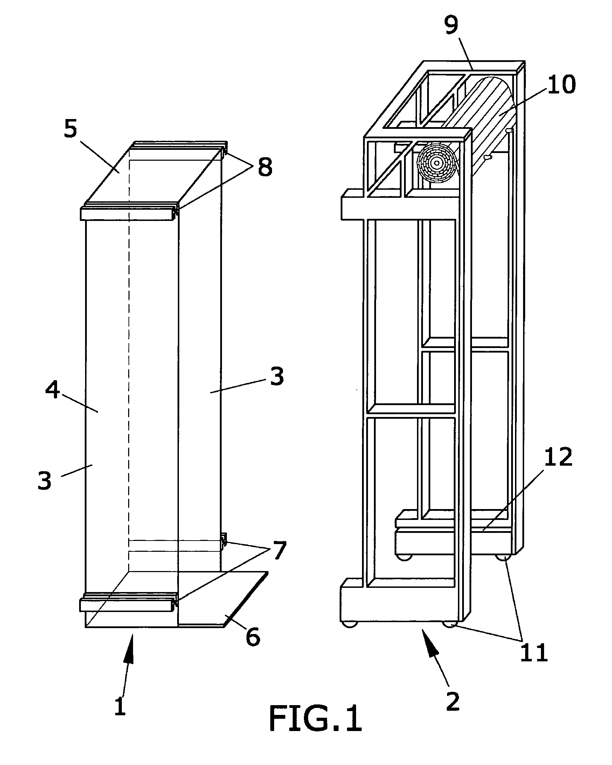

Figure 1 shows the two bodies making up the protection cabinet, thus having a fixed body (1) and a mobile body (2).

The fixed body (1) has two sides (3), a rear portion (4), a roof (5) and a floor (6), defining an inner space that together with the inner space defined also by the mobile body (2) allows housing the amusement machine inside.

The fixed body has sliding and guiding means that co-operate with supplementary means arranged on the mobile body (2), which in one embodiment are lower side guides (7) and in another are top side guides (8) that co-operate with flutes or grooves arranged a complementary manner, such as the grooves or lower guides (12) shown on the mobile body (2).

The guides of the fixed body (1) and the mobile body (2) have butt ends in order to prevent unlimited travel of the mobile body (2), thus preventing the separation of both bodies.

In order to facilitate the shifting of mobile body (2) with respect to the fixed body (1), the mobile body has rolling means on its base, which in one possible embodiment can be wheels (11).

In one possible embodiment the closing means are achieved by means of blind (10) housed in a drawer (9) such that the mobile body (2) is higher than the fixed body (1) and where the different in height corresponds to the drawer (9) housing the blind (10). The blind is pulled down and secured to the floor to enclose the amusement machine in the inner space defined by the two bodies.

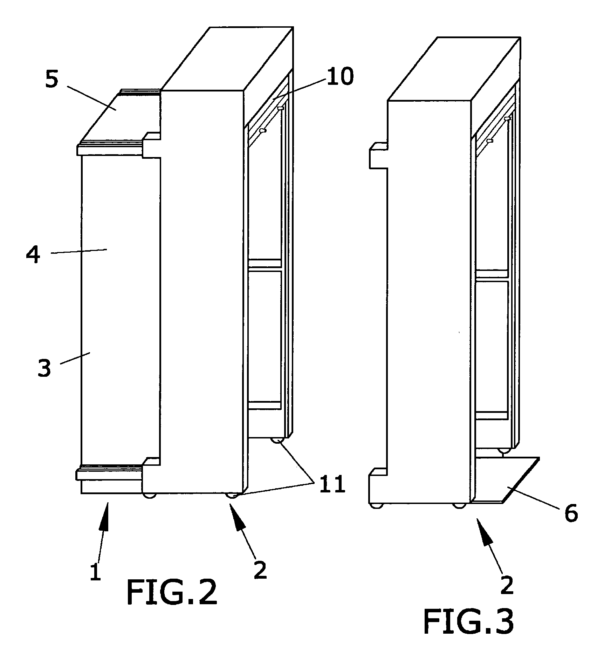

Figure 2 shows the relative arrangement of the mobile body (2) with respect to the fixed body (1) in the position of protection of the amusement machine.

Figure 3 shows the relative position of the mobile body (2) with respect to the fixed body (1) in the position of use by the public, for which the mobile body (2) has been shifted over the fixed body (1) so that both overlap, leaving the entire machine accessible and completely visible and thus attracting the public.

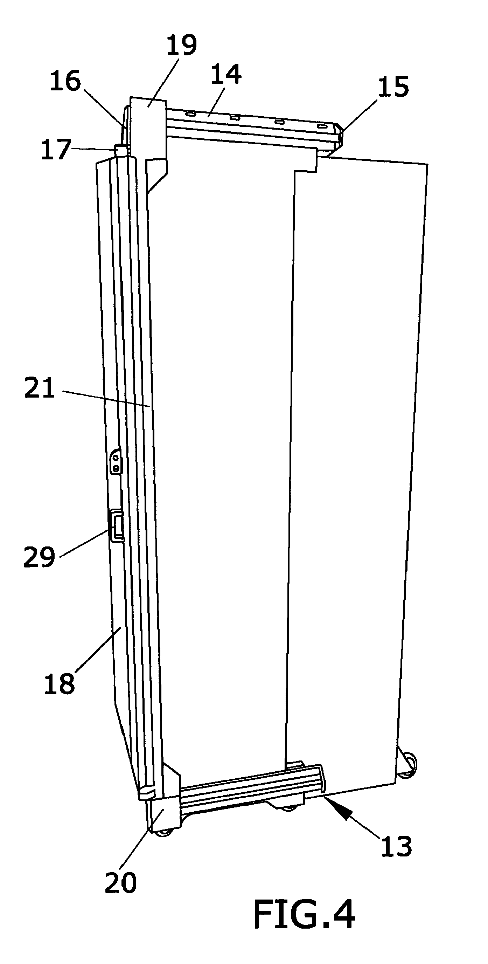

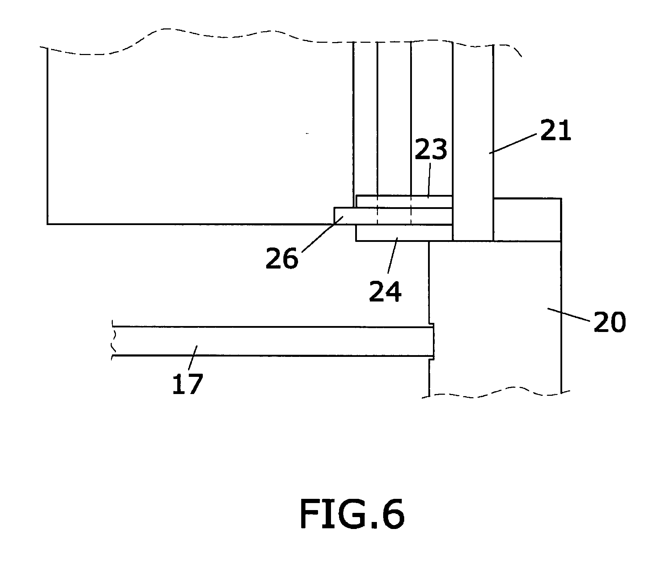

Figures 4 to 7 show the characteristic details of an alternative employment regarding the closing means of the mobile body by means of one or two hinged sheets that are fixed on the sides of the mobile body. In order to facilitate the opening and closing of the mobile body it is preferable for it to have two hinged sheets.

Therefore, Figure 4 shows one side of the mobile body and sheets (18) closing access to the inside of the mobile body, where each one of these sheets (18) can be shifted lengthwise in parallel to the side of the mobile body and can also rotate with respect to an axis when reaching a certain point, such that when the mobile body has its front part open the sheets remain abutted against the sides of the mobile body, and when arranged to close the mobile body they have been shifted by making them project from the sides and hinge backwards.

In order to shift lengthwise, each of the sheets (18) has guides (13) arranged on the top and the bottom portion of each side of the mobile body. Each of these guides (13) is made up of a workpiece (14) that is attached to the mobile body that is greater in length than the width of the sheet and also having a front stop (15) and a rear stop (16) welded on to the ends of the workpiece (14). Moreover, a workpiece with a square section that acts as a guide (17) is welded upon said front stop (15) and rear stop (16).

The front stop (15) acts as a stop for the lengthwise movement of the sheet when it moves in the sense of extracting the side, where is the rear stop (16) acts as a stop for the shifting of the sheet along the side of the mobile body when arranged parallel to the side of the mobile body.

The shifting of the sheets (18) along the guides (13) and specifically that of the tubular profile acting as a guide (17) is carried out by means of bearings housed in the upper (19) and lower (20) bearing boxes that are joined by an arm (21) as shown in Figure 4.

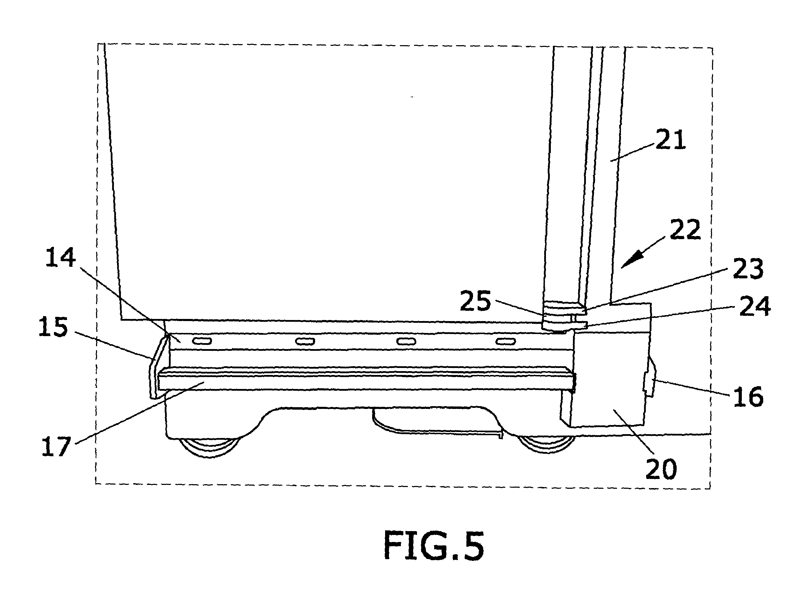

Figure 5 shows a sheet (18) that is stowed on one side of a mobile body, where there is a lower hinge (22) which, together with a top hinge, allows rotation of the door. Said hinge (22) has two parallel parts (23) and (24) joined to the arm (21) that joins the bearing boxes (19) and (20). Between said parts (23) and (24) there is a rotation pin (25) for the sheet (18).

Since there is no stop for the closing movement of the sheet (18) over the mobile body, it is the structure of the body itself that acts as a stop for the rotation of the door. On the other hand, the sheet lacks any stop at all in the opening rotation of the sheet.

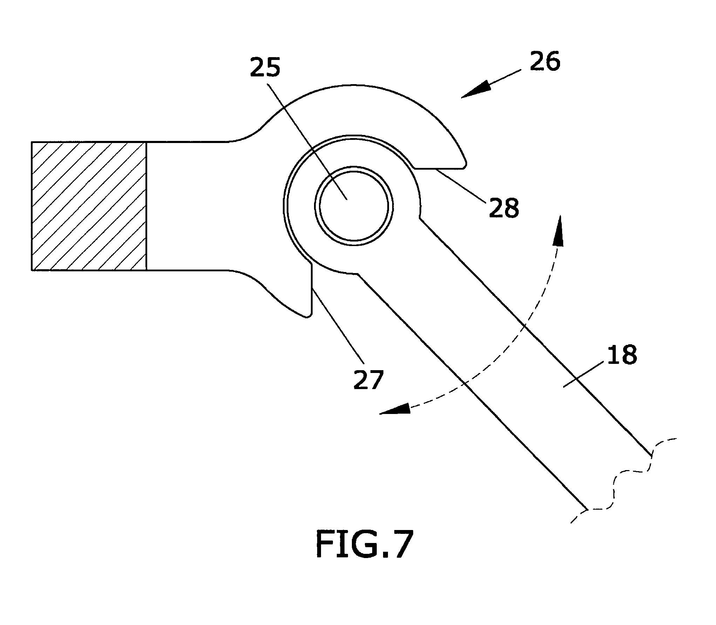

Now, and in order to provide stops for the rotation of the sheets, a part (26) is inserted between parts (23) and (24) that acts as a stop and has the shape of a "C", and which houses inside the rotation axis or pin (25) of the sheet (18), having a free end, specifically the lower end, as shown in Figure 7, a stop (27) for the sheet (18), whereas on the other end of the part (26) there is a closing stop (28) for the opening of the door.

Variations in materials, shapes, size and the arrangement of the component elements, described in a non-limiting manner, do not alter the essence of this invention, this being sufficient for its reproduction by an expert.

## Claims

1. A protection cabinet for amusement machines **characterised in that** it consists in:
- a fixed body (1) and
- a mobile body (2) that shifts with respect to the fixed body, where;
the fixed body (1) has shifting and guiding meetings that co-operate with complementary means arranged on the mobile body (2), and where the mobile body also has rolling means in order to shift the mobile body over the fixed body.

2. A protection cabinet for amusement machines according to claim 1, **characterised in that** the fixed body (1) has two sides (3), a rear portion (4), a roof (5) and a floor (6).

3. A protection cabinet for amusement machines according to claim 1, **characterised in that** the mobile body (2) is higher than the fixed body (1) and has on its top portion a drawer (9) housing a blind (10).

4. A protection cabinet for amusement machines according to claims 2 or 3, **characterised in that** the shifting or guiding means on the mobile body consist in lower lateral guides (7) and other top lateral guides (8) that co-operate with channels or grooves (12) arranged in a complementary manner on the mobile body (2).

5. A protection cabinet for amusement machines according to claim 1, **characterised in that** the rolling means of the mobile body (2) over the fixed body (1) consist in wheels (11) arranged on the base of the mobile body (2).

6. A protection cabinet for amusement machines according to claim 1, **characterised in that** the shifting or guiding means of both the fixed body (1) and the mobile body (2) have a stop in order to link both bodies.

7. A protection cabinet for amusement machines according to claim 1, **characterised in that** the mobile body has closing means consisting in at least one sheet that, abutted against one side of the mobile body travels along top and bottom guides (13) and has hinging means.

8. A protection cabinet for amusement machines according to claim 7, **characterised in that** the guides (13) comprise a workpiece (14) attached to the mobile body that is longer than the width of the sheet and also has a front stop (15) and a rear stop (16) that are welded onto the ends of the workpiece (14), and another workpiece with a square section is welded onto said front stop (15) and rear stop (16) that acts as a guide (17), and where the shifting of the sheets (18) along the guides (13) and especially along the tubular profile that acts as a guide (17) is carried out by means of bearings housed in the top (19) and bottom (20) bearing boxes, which are joined by an arm (21).

9. A protection cabinet for amusement machines according to claim 8, **characterised in that** the hinging means provided on the sheet or sheets (18) have two parallel parts (23) and (24) joined to the arm (21) joining the rolling boxes (19) and (20), with the rotation axis or pin (25) of the sheet (18) being housed between said parts (23) and (24).

10. A protection cabinet for amusement machines according to claim 9, **characterised in that** in order to provide rotation stops on the sheets a workpiece (26) is inserted between the parts (23) and (24) that acts as a stop and has the shape of a "C", which houses inside it the rotation axis or pin (25) of the sheet (18), having a stop (27) of the sheet (18) on a free end of such workpiece (26), and on the other end of the workpiece (26) a closing stop (28) for the opening of the door.
